# EUROPÄISCHE PATENTANMELDUNG

(11) **EP 1 355 012 A2**
(43) Veröffentlichungstag der Anmeldung: **22.10.2003**
(21) Anmeldenummer: 03007180.7
(22) Anmeldetag: 28.03.2003
(51) Int. Cl.: E04B 1/58

(54) **Bausatz mit Eckverbinder**

(30) Priorität: 19.04.2002 DE 10217574
(71) Anmelder: Welser Profile AG, 3341 Ybbsitz (AT)
(72) Erfinder: Welser, Andreas, Mag., 3341 Ybbsitz (AT)
(74) Vertreter: Grünecker, Kinkeldey, Stockmair & Schwanhäusser Anwaltssozietät

(57) **Zusammenfassung**

Bausatz aus mindestens einem Eckverbinder und einer aus mindestens einem C-oder U-Profil gefertigten Profilecke, wobei das C- oder U-Profil eine Hauptseite mit einer daran anschließenden Verbindungsseite zu einer Nebenseite aufweist, die Profilecke durch zwei Schenkel des C- oder U-Profils gebildet ist, die Nebenseiten und Verbindungsseiten der Schenkel des C- oder U-Profils auf Gehrung zueinander geschnitten sind und die Hauptseiten der Schenkel des C- oder U-Profils entlang einer Verbindungslinie miteinander verbunden sind, wobei ein Eckverbinder als eine sich im Inneren des C- oder U-Profils in beiden Schenkeln beiderseits der Verbindungslinie verspannende Kralle ausgebildet ist, um ein Arretieren der Profile zu gewährleisten. In einer derart ausgestalteten Erfindung lässt sich eine einfache Konstruktion und Montage unter Wahrung der Kosten gewährleisten.

## Beschreibung

Die vorliegende Erfindung bezieht sich auf einen Bausatz zum Verbinden einer Ecke eines auf Gehrung geschnittenen C- oder U-Profils aus mindestens einem Eckverbinder und einer aus mindestens einem C- oder U-Profil gefertigten Profilecke, wobei das C- oder U-Profil eine Hauptseite mit einer daran anschließenden Verbindungsseite zu einer Nebenseite aufweist, die Profilecke durch zwei Schenkel des C- oder U-Profils gebildet ist, die Nebenseiten und Verbindungsseiten der Schenkel des C- oder U-Profils auf Gehrung zueinander geschnitten sind und die Hauptseiten der Schenkel des C- oder U-Profils entlang einer Verbindungslinie miteinander verbunden sind.

Aus dem Stand der Technik sind C- oder U-Profile bekannt, die zueinander auf Gehrung geschnitten sind. Diese C- oder U-Profile, welche an den Schnittflächen zusammenstoßen, werden durch Schweißen z.B. Punktschweißen an den Schnittflächen miteinander verbunden. Derartige Schweißverbindungen sind jedoch zeit- und kostenintensiv.

Es ist somit Aufgabe der vorliegenden Erfindung, einen einfach zu konstruierenden, einfach herzustellenden und vor allen Dingen kostengünstigen Bausatz aus einem C-oder U-Profil darzustellen.

Diese Aufgabe wird erfindungsgemäß durch einen Bausatz gelöst, bei dem ein Eckverbinder als eine sich im Inneren des C- oder U-Profils, in beiden Schenkeln beiderseits der Verbindungslinie verspannende Kralle ausgebildet ist, um ein Arretieren der Profilecke zu gewährleisten.

Dadurch, dass die Kralle in den Schenkeln des Profils eine Spannung aufbaut, die Schenkel des Profils, die an der Verbindungslinie zusammenhängend ausgestaltet sind, sich jedoch nicht voneinander trennen, wird die Profilecke arretiert, wodurch eine Verformung verhindert wird. Die Montage einer erfindungsgemäßen Kralle in ein erfindungsgemäßes C- oder U-Profil zum Erreichen des Bausatzes ist schnell und einfach zu bewerkstelligen. Es bedarf keines besonders geschulten Personals, um die stabile Ausgestaltung der Profilecke zu gewährleisten, wodurch erhöhte Lohnkosten vermieden werden und eine kostengünstige Alternative zu bestehenden Bausätzen gestellt wird.

Vorteilhafte Ausgestaltungen sind in den Unteransprüchen wiedergegeben.

Besonders vorteilhaft ist es, wenn die Kralle sowohl zwischen der Innenseite der Hauptseite und der Innenseite der Nebenseite des einen Schenkels der Profilseite, als auch zwischen der Innenseite der Hauptseite und der Innenseite der Nebenseite des anderen Schenkels verspannend ausgestaltet ist. Hierdurch kann die Spannung, die für die Stabilisierung der Profilecke benötigt wird, erreicht werden. Dadurch können Kräfte aufgefangen und kompensiert werden, welche zum Verformen der Schenkel des Profils geeignet wären. Dadurch ist eine zerstörungsresistente Ausgestaltungsform des Bausatzes gewährleistet.

Dadurch, dass die Kralle an den, den Nebenseiten zugewandten Abschnitten eine Umbiegung aufweist, die der Nebenseite zumindest teilweise anliegt, kann eine besonders vorteilhafte Ausprägung erreicht werden. Durch diese Ausprägung kann ein Abstützten der Kralle an dem C- oder U-Profil und somit ein Verspannen der Kralle innerhalb des C- oder U-Profils erreicht werden. Zusätzlich dazu kann eine Selbstausrichtung der Kralle innerhalb des C- oder U-Profils stattfinden, was zu einer einfachen Montage und damit geringeren Lohnkosten führt.

Besonders vorteilhaft ist es, wenn gemäß einer Variante die an den Haupt- und Nebenseiten anliegenden Enden der Kralle zackig ausgestaltet sind. Dadurch wird die Haftreibung erhöht und ein Herausfallen der Kralle verhindert. Eine längere Lebensdauer, selbst unter extremen Einsätzen, ist die Folge.

Besonders vorteilhaft ist es, wenn die Kralle in einer weiteren Variante im Wesentlichen planparallel zu einer Verbindungsseite ausgestaltet ist, wodurch genügend Bauraum im Inneren des C- oder U-Profils zur Verfügung steht, um weitere Bauteile unterzubringen. So lassen sich z.B. Kabel äußerst einfach in dem Bausatz verlegen.

Besonders vorteilhaft ist es, wenn die Kralle ein Stanz-Biegeteil aus Blech ist, da die Herstellung solcher Massenprodukte äußerst kostengünstig zu bewerkstelligen ist.

Wenn an die Nebenseite des C- oder U-Profils eine Zusatzseite in einer besonderen Ausführungsform anschließt, an die sich ein Nebenschenkel der Kralle abstützt, stellt sich der Vorteil einer zusätzlichen Sicherung gegen Verwinden des C- oder U-Profils ein.

Wenn zwei Krallen in einem Kanal einsetzbar sind, zeigen sich bei dieser Variante weitere Vorteile. So kann die Verwindbarkeit des Kanals weiter eingeschränkt werden und eine höhere Belastbarkeit des Kanals gewährleistet werden.

Besonders vorteilhaft ist es, wenn in einer Variante der Erfindung vier C- oder U-Profile und zwei Krallen zu einem Bausatz kombinierbar sind, da dann eine besonders stabile und vielseitige Einsatzform gewährleistbar ist.

Wenn eine Kralle eine Hauptfläche, zwei an diese anschließende Hauptschenkel und zwei mit der Hauptfläche an Biegelinien verbundene Nebenschenkel aufweist, stellt sich ein weiterer Vorteil ein. In einer solchen Ausgestaltungsvariante lässt sich ein Zusammenbau des Bausatzes schneller bewerkstelligen.

Eine besonders haltbare Verbindung ergibt sich, wenn die Nebenschenkel entlang zweier Biegelinien um maximal 90° von der Hauptfläche abgewinkelt sind.

Leichte Montierbarkeit und schneller Zusammenbau lässt sich erreichen, wenn in der Hauptfläche eine Aussparung vorgesehen ist.

Besonders vorteilhaft ist es, wenn zumindest bei einer Kralle zwischen einer Ebene durch die Hauptfläche und jeweils einer Ebene durch die Hauptschenkel ein Winkel von mindestens 2° vorliegt. Dann lässt sich eine leichte und schnell herzustellende Bausatzvariante produzieren, durch die kurze Lieferzeiten ermöglicht werden.

Wenn zwei C- oder U-Profile mit mindestens einer Kralle zu einem Kanal kombiniert werden, kann sich dies in dieser Ausgestaltungsform der Erfindung als besonders vorteilhaft erweisen, da sich dann eine höhere Anzahl an Verwendungsmöglichkeiten für den Bausatz ergeben.

Im Folgenden werden Ausführungsbeispiele der vorliegenden Erfindung anhand einer Zeichnung näher erläutert. Es zeigen:
- Fig. 1: eine perspektivische Ansicht des Bausatzes, bestehend aus sowohl zwei C-förmigen Profilen, die miteinander nahtlos verbunden sind und insgesamt zwei Schenkel aufweisen, die über eine Verbindungslinie miteinander verbunden sind, und zwei Krallen des Bausatzes,
- Fig. 2: einen Querschnitt durch einen Schenkel der zwei C-Profile und zwei Krallen entlang der Linie II aus Fig. 1,
- Fig. 3: eine Draufsicht auf den Bausatz entlang der Linie III aus Fig. 2,
- Fig. 4: einen Längsschnitt durch den Bausatz in Höhe der Linie IV aus Fig. 2,
- Fig. 5: eine Detaildraufsicht der Kralle des Bausatzes aus den Fig. 1 bis 4,
- Fig. 6: ein Abwickelbild in Draufsicht der Kralle aus Fig. 5,
- Fig. 7: eines Seitenansicht der Kralle aus Fig. 5,
- Fig. 8: eine Rückansicht der Kralle aus Fig. 5 und
- Fig. 9: eine perspektivische Rückansicht des Bausatzes aus Fig. 1.

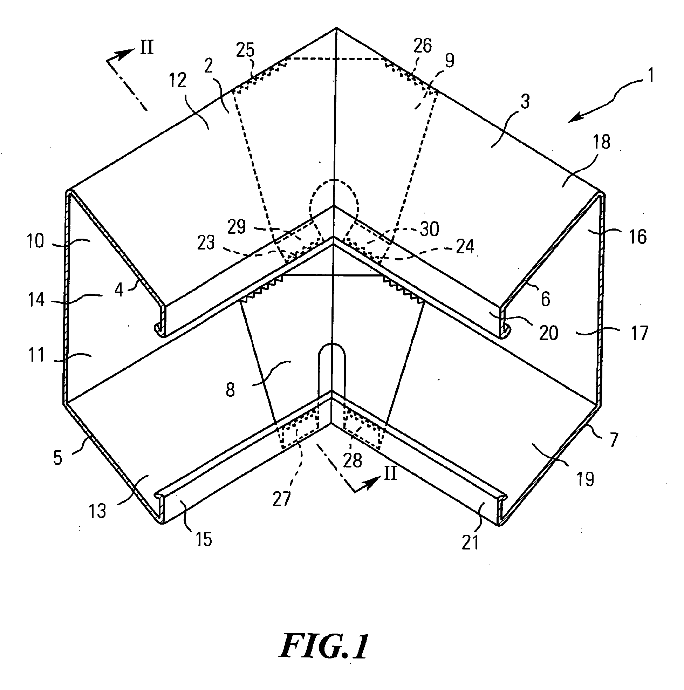

In Fig. 1 ist der Bausatz 1, bestehend aus zwei Schenkeln 2 und 3, aufgebaut aus C-Profilen 4, 5, 6 und 7, und zwei Krallen 8 und 9 dargestellt. Dabei sind die C-Profile 4 und 5, an den Hauptseiten 10 und 11 miteinander nahtlos verbunden. Die Verbindungsseite 12, des C-Profils 4 verläuft parallel zur Verbindungsseite 13 des C-Profils 5. Die Verbindungsseite 12 bildet mit der Hauptseite 10 des C-Profils 4 einen rechten Winkel. Die Verbindungsseite 13 bildet mit der Hauptseite 11 des C-Profils 5 einen rechten Winkel. Die Hauptseiten 10 und 11 der C-Profile 4 und 5 bilden einen 180°-Winkel. Die Nebenseite 14 schließt an die Verbindungsseite 12 des C-Profils 4 nahtlos in einem rechten Winkel, parallel zur Hauptseite 10, auf die Verbindungsseite 13 gerichtet an. Die Nebenseite 15 schließt an die Verbindungsseite 13 des C-Profils 5 nahtlos in einem rechten Winkel an. Dabei verläuft die Nebenseite 15 parallel zur Hauptseite 11 und zeigt auf die Verbindungsseite 12. Somit sind die Nebenseiten 14 und 15 zueinander parallel und laufen aufeinander zu. In diesem Ausführungsbeispiel sind die einzelnen Seiten 10 bis 15 des einen Schenkels 2 des Bausatzes aus einem Stanz-Biegeteil aus Blech gefertigt.

Der Schenkel 3 besteht aus zwei C-Profilen 6 und 7. Das C-Profil 6 weist eine Hauptseite 16, eine an diese anschließende Verbindungsseite 18 und eine an diese anschließende Verbindungsseite 20 auf. Die Hauptseite 16 bildet mit der Verbindungsseite 18 einen 90°-Winkel. Die Verbindungsseite 18 bildet mit der Nebenseite 20 einen 90°-Winkel.

Das C-Profil 7 weist eine Hauptseite 17, eine Verbindungsseite 19 und eine Nebenseite 21 auf. Dabei bilden die Hauptseite 17 und die Verbindungsseite 19 einen 90°-Winkel. Auch bilden die Verbindungsseite 19 und die Nebenseite 21 einen 90°-Winkel. Die Verbindungsseiten 18 und 19 verlaufen zueinander parallel. Die Nebenseiten 21 und 20 verlaufen ebenso zueinander parallel. Die Nebenseiten 20 und 21 verlaufen zu den Hauptseiten 16 und 17 parallel. Die Hauptseiten 16 und 17 sind miteinander nahtlos verbunden und bilden einen 180°-Winkel.

Die Nebenseiten 20 und 21 laufen aufeinander zu. Die Seiten 16 bis 21 des Schenkels 3, der C-Profile 6 und 7, sind aus einem Stanz-Biegeteil aus Blech gefertigt.

Die Nebenseiten 14, 15, 20 und 21 weisen weitere Umfalzungen auf.

Die Schenkel 2 und 3 des Bausatzes 1 sind aus einem Stanz-Biegeteil gefertigt. Dabei sind die Schenkel 2 und 3 über die Hauptseiten 10 und 11 mit den Hauptseiten 16 und 17 verbunden. Die Hauptseiten 10 und 11 bilden mit den Hauptseiten 16 und 17 eine Verbindungslinie 22. Die Hauptseiten 10 und 11 bilden an der Verbindungslinie 22 mit den Hauptseiten 16 und 17 einen 90°-Winkel in dieser Ausführungsform. Sowohl die Verbindungsseiten 12 und 13 als auch die Nebenseiten 14 und 15 sind zu den Verbindungsseiten 18 und 19 und zu den Nebenseiten 20 und 21 auf Gehrung zueinander geschnitten.

Die Kralle 8 und die Kralle 9 verspannen die zwei Schenkel 2 und 3 des Bausatzes 1. Die Kralle 8 liegt dabei auf der Verbindungsseite 13 des C-Profils 5 und auf der Verbindungsseite 19 des C-Profils 7 flächig an.

Die Kralle 8 weist einen Hauptschenkel 23 und einen Hauptschenkel 24 auf. Die beiden Hauptschenkel 23 und 24 sind zackig ausgebildet. Der Hauptschenkel 23 der Kralle 8 verspannt sich in der Hauptseite 11 des C-Profils 5 im Schenkel 2. Der Hauptschenkel 24, der ebenso zackig ausgestaltet ist, verspannt sich in der Hauptseite 17 des C-Profils 7 im Schenkel 3.

Die Kralle 9 ist wie die Kralle 8 ausgestaltet. Die Kralle 9 weist zwei Hauptschenkel 25 und 26 auf. Der Hauptschenkel 25 und der Hauptschenkel 26 sind zackig ausgestaltet. Der Hauptschenkel 25 verspannt sich in der Hauptseite 10 des Profils 4 im Schenkel 2. Der Hauptschenkel 26 verspannt sich in der Hauptseite 16 des C-Profils 6 des Schenkels 3. Die Kralle liegt flächig auf den Verbindungsseiten 12 und 18 an. Die Krallen 8 und 9 liegen im Inneren des von den C-Profilen 4, 5, 6 und 7 gebildeten Raums. Die Kralle 8 weist die Nebenschenkel 27 und 28 auf. Die Kralle 9 weist die Nebenschenkel 29 und 30 auf.

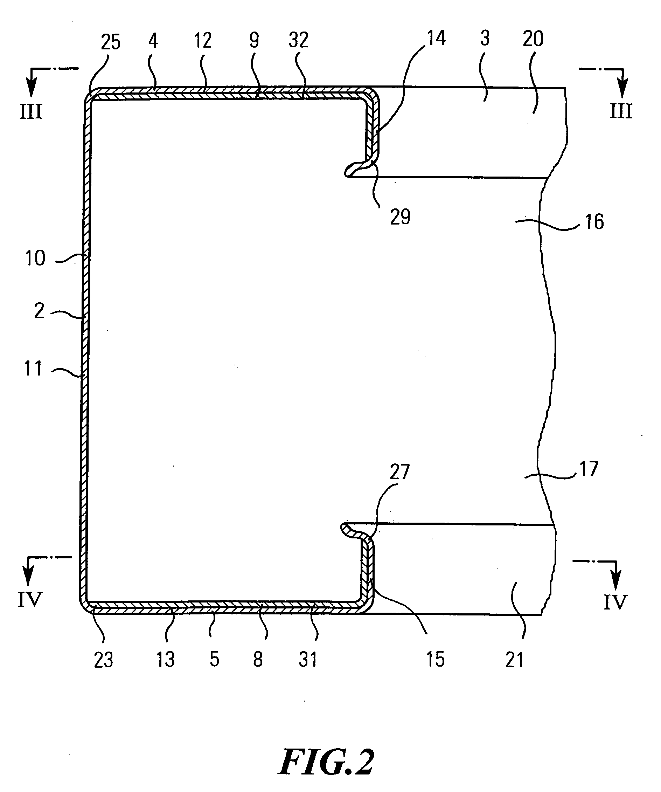

In Fig. 2 ist ein Schnitt durch den Schenkel 2 entlang der Linie II aus Fig. 1 hergestellt. Dabei sind die C-Profile 4 und 5 geschnitten. Es sind die Hauptseiten 10 und 11, die Verbindungsseiten 12 und 13 und die Nebenseiten 14 und 15 der beiden C-Profile 4 und 5 zu erkennen. Die Krallen 8 und 9 liegen jeweils an der Verbindungsfläche 13 bzw. 12 flächig an. Die Hauptfläche 31 der Kralle 8 liegt an der Verbindungsseite 13 an. Die Hauptfläche 32 der Kralle 9 liegt an der Verbindungsseite 12 an. Ein Nebenschenkel 27 der Kralle 8 bildet mit der Hauptfläche 31 einen 90°-Winkel. Dabei liegt der Nebenschenkel an der Nebenseite 15 an. Der Nebenschenkel 27 ist am Ende zackig ausgestaltet. Die Nebenseite 15 weist am Ende eine Umbiegung auf, an der sich der zackig ausgestaltete Nebenschenkel 27 verspannt und verkrallt. Die Nebenseite 14 des C-Profils 4 weist eine nach innen in Richtung der Hauptseite 10 gerichtete Umbiegung auf. An dieser Umbiegung verspannt sich ein zackig ausgestalteter Nebenschenkel 29. Der Nebenschenkel 29 der Kralle 9 weist einen 90°-Winkel zur Hauptfläche 32 der Kralle 9 auf. Der Nebenschenkel 29 verläuft parallel zur Hauptseite 10. Die Hauptschenkel 23 verspannt sich in der Hauptseite 11. Der Hauptschenkel 25 verspannt sich in der Hauptseite 10.

Von dem Schenkel 3 sind die Hauptseiten 16 und 17 sowie die Nebenseiten 20 und 21 zu erkennen.

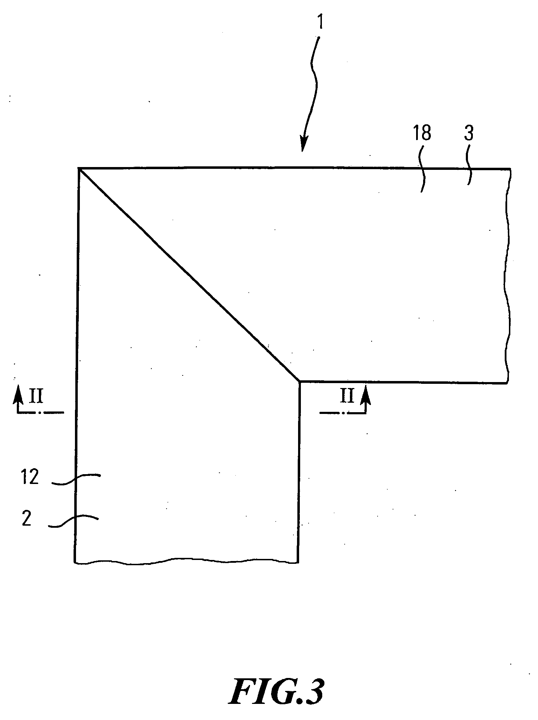

In Fig. 3 sind in einer Draufsicht entlang der Linie III aus Fig. 2 die Schenkel 2 und 3 des Bausatzes 1 mit deren Verbindungsseiten 12 und 18 zu erkennen.

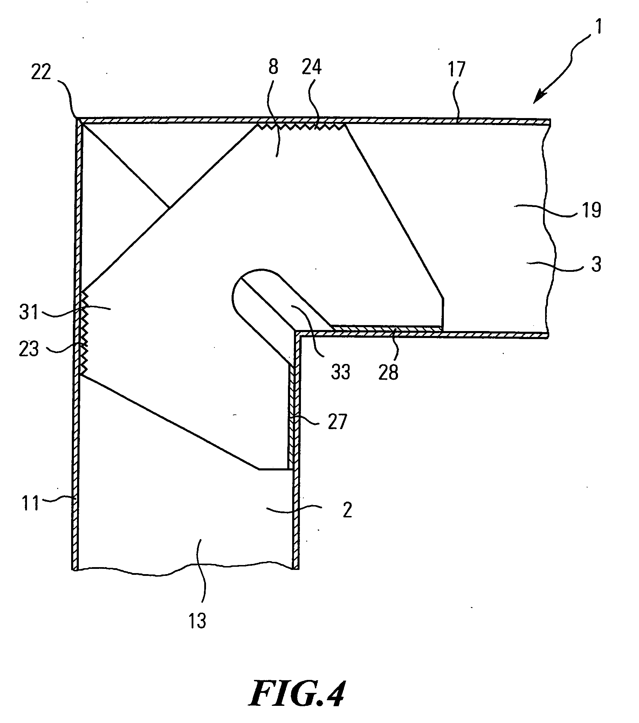

In Fig. 4 ist ein Längsschnitt durch den Bausatz 1 aus Fig. 2 zu erkennen. Hier sind die Schenkel 2 und 3 des Bausatzes 1 zu erkennen. Sie sind an der Verbindungslinie 22 miteinander verbunden. Die Kralle 8 weist die Hauptschenkel 23 und 24 auf. Diese Hauptschenkel 23 und 24 sind zackig ausgestaltet. Der Hauptschenkel 23 verspannt sich in der Hauptseite 11. Ein Hauptschenkel 24 der Kralle 8 verspannt sich in der Hauptseite 17. Eine Hauptfläche 31 der Kralle 8 weist eine Aussparung 33 auf. Diese Aussparung 33 ermöglicht ein einfaches Einsetzen in die Schenkel 2 und 3.

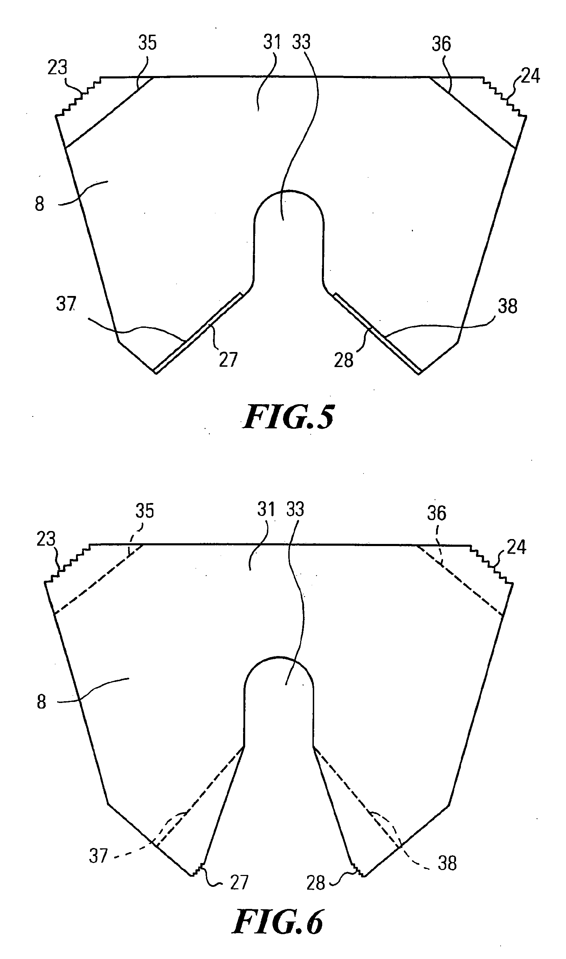

Fig. 5 zeigt eine Kralle 8, die baugleich zu einer Kralle 9 ist. Lediglich die Position, Einsetzart und/oder Lage im Bausatz ist unterschiedlich. Die Kralle 8 weist einen metallenen Körper auf. Die Kralle 8 enthält eine Hauptfläche 31, eine Aussparung 33 und die Hauptschenkel 23 und 24. Die Hauptschenkel 23 und 24 sind zackig ausgestaltet. Die Hauptschenkel 23 und 24 weisen Biegelinien 35 und 36 auf. Die Hauptschenkel 23 und 24 sind entlang der Biegelinien 35 und 36 in einem 5°-Winkel zur Hauptfläche 31 nach oben gebogen. Die Nebenschenkel 27 und 28, die zackig ausgestaltet sind, sind in diesem Ausführungsbeispiel entlang der Biegelinien 37 und 38 in einem 90°-Winkel zur Hauptfläche 31 nach oben gebogen.

In Fig. 6 ist die Kralle 8 dargestellt. Sie weist die Hauptschenkel 23 und 24, die entlang der Biegelinien 35 und 36 der Hauptfläche 31 biegbar ausgestaltet sind, auf. Die Nebenschenkel 27 und 28 sind entlang der Biegelinien 37 und 38 biegbar ausgestaltet. Aus der Hauptfläche 31 ist eine Aussparung 33 freigehalten.

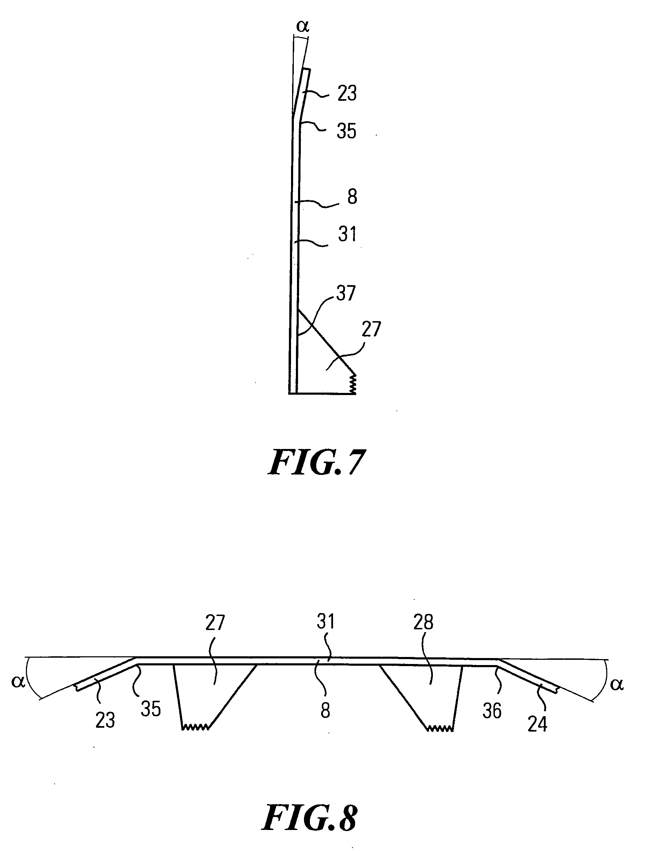

In Fig. 7 ist der Winkel α, der wie in Fig. 5 beschrieben, 5° umfasst, dargestellt. Die Kralle 8 weist den Nebenschenkel 27 auf. Die Biegelinie 37 ist zwischen dem Nebenschenkel 27 und der Hauptfläche 31 ersichtlich. Die Biegelinie 35, zwischen dem Hauptschenkel 23 und der Hauptfläche 31 der Kralle 8, ist ebenso ersichtlich.

In Fig. 8 ist die Kralle 8 in einer Rückansicht dargestellt, aus der die Winkel α gemessen zwischen einer Ebene durch die Hauptfläche 31 und einer Ebene entweder durch den Hauptschenkel 23 oder durch den Hauptschenkel 24 ersichtlich werden. Die Biegelinien 35 und 36 sind zwischen der Hauptfläche 31 und dem Hauptschenkel 23 einerseits und der Hauptfläche 31 und dem Hauptschenkel 24 andererseits dargestellt. Die Nebenschenkel 27 und 28 sind ebenso zu erkennen.

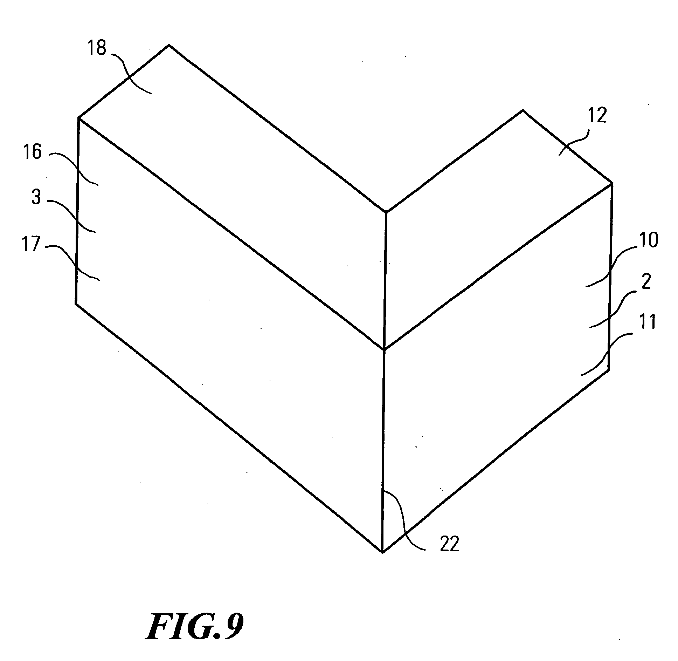

Fig. 9 ist eine perspektivische Rückansicht des Bausatzes darstellt. Die Hauptseiten 16 und 17 des Schenkels 3 sind entlang der Biegelinie 22 mit den Hauptseiten 10 und 11 des Schenkels 2 verbunden.

## Patentansprüche

1. Bausatz (1) aus mindestens einer Kralle (8 oder 9) und einer aus mindestens einem C- oder U-Profil (4,5,6 oder 7) gefertigten Profilecke, wobei das C- oder U-Profil (4,5,6 oder 7) eine Hauptseite (10,11,16 oder 17) mit einer daran anschließenden Verbindungsseite (12,13,18 oder 19) zu einer Nebenseite (14,15,20 oder 21) aufweist, die Profilecke durch zwei Schenkel (2 und 3) des C- oder U-Profils (4,5,6 oder 7) gebildet ist, die Nebenseiten (14,15,20 oder 21) und Verbindungsseiten (12,13,18 oder 19) der Schenkel des C- oder U-Profils (4,5,6 oder 7) auf Gehrung zueinander geschnitten sind und die Hauptseiten (10,11,16 oder 17) der Schenkel (2 und 3) des C- oder U-Profils (4,5,6 oder 7) entlang einer Verbindungslinie (22) miteinander verbunden sind, wobei die Kralle (8 oder 9) als eine sich im Inneren des C- oder U-Profils (4,5,6 oder 7), in beiden Schenkeln (2,3) beiderseits der Verbindungslinie (22) verspannende Kralle ausgebildet ist, um ein Arretieren der Profilecke zu gewährleisten.

2. Bausatz (1) nach Anspruch 1, **dadurch gekennzeichnet, dass** die Kralle (8 oder 9) sowohl zwischen der Innenseite der Hauptseite (10 oder 11) und der Innenseite der Nebenseite (14 oder 15) des einen Schenkels (2) der Profilecke, als auch zwischen der Innenseite der Hauptseite (16 oder 17) und der Innenseite der Nebenseite (20 oder 21) des anderen Schenkels (3) verspannend ausgestaltet ist.

3. Bausatz (1) nach Anspruch 1 oder 2, **dadurch gekennzeichnet, dass** die Kralle (8 oder 9) an der, den Nebenseiten (14,15,20 oder 21) zugewandten Abschnitten eine Umbiegung aufweist, die der Nebenseite (14,15,20 oder 21) zumindest teilweise anliegt.

4. Bausatz (1) nach einem der Ansprüche 1 bis 3, **dadurch gekennzeichnet, dass** die an den Hauptseiten (10,11,16 oder 17) und an den Nebenseiten (14,15,20 oder 21) anliegenden Enden die Kralle (8 oder 9) zackig ausgestaltet sind.

5. Bausatz (1) nach einem der Ansprüche 1 bis 4, **dadurch gekennzeichnet, dass** die Kralle (8 oder 9) im Wesentlichen planparallel zu der Verbindungsseite (12,13,18 oder 19) ausgestaltet ist.

6. Bausatz (1) nach einem der Ansprüche 1 bis 5, **dadurch gekennzeichnet, dass** die Kralle (8 oder 9) aus einem Stanz-Biegeteil aus Blech oder Kunststoff hergestellt ist.

7. Bausatz (1) nach einem der Ansprüche 1 bis 6, **dadurch gekennzeichnet, dass** an die Nebenseite (14,15,20 oder 21) des C- oder U-Profils (4,5,6 oder 7) eine Zusatzseite anschließend vorgesehen ist, an der sich ein Nebenschenkel (27,28,29 oder 30) der Kralle (8 oder 9) abstützt.

8. Bausatz (1) nach einem der Ansprüche 1 bis 7, **dadurch gekennzeichnet, dass** zwei Krallen (8 oder 9) in einen Kanal einsetzbar sind.

9. Bausatz (1) nach einem der Ansprüche 1 bis 8, **dadurch gekennzeichnet, dass** vier C- oder U-Profile (4,5,6 und 7) und zwei Krallen (8 und 9) zu einem Bausatz (1) kombinierbar sind, im speziellen durch eine Klemmkombination.

10. Bausatz (1) nach einem der Ansprüche 1 bis 9, **dadurch gekennzeichnet, dass** zumindest eine Kralle (8 oder 9) eine Hauptfläche (31 oder 32), zwei an diese anschließende Hauptschenkel (23 und 24 oder 25 und 26), und zwei mit der Hauptfläche (31 oder 32) an Biegelinien (37 und 38) verbundene Nebenschenkel (27 und 28 oder 29 und 30) aufweist.

11. Bausatz (1) nach einem der Ansprüche 1 bis 10, **dadurch gekennzeichnet, dass** die Nebenschenkel (27 und 28 oder 29 und 30) entlang zweier Biegelinien (37 und 38) um maximal 90° von der Hauptfläche (31 oder 32) abgewinkelt sind.

12. Bausatz (1) nach einem der Ansprüche 1 bis 11, **dadurch gekennzeichnet, dass** in der Hauptfläche (31 oder 32) eine Aussparung (33) vorgesehen ist.

13. Bausatz (1) nach einem der Ansprüche 1 bis 12, **dadurch gekennzeichnete, dass** zumindest bei einer Kralle (8 oder 9) zwischen einer Ebene durch die Hauptfläche (31 oder 32) und jeweils einer durch eine Biegelinie (35 oder 36) und den Hauptschenkel (23 oder 24) verlaufende Ebene ein Winkel von mindestens 2° liegt.

14. Bausatz (1) nach einem der Ansprüche 1 bis 13, **dadurch gekennzeichnet, dass** mindestens zwei C- oder U-Profile (4,5,6 oder 7) mit mindestens einer Kralle (8 oder 9) zu einem Kanal kombinierbar sind.
